# EUROPÄISCHE PATENTSCHRIFT

(11) **EP 2 121 414 B1**
(45) Veröffentlichungstag und Bekanntmachung des Hinweises auf die Patenterteilung: **07.04.2010**
(21) Anmeldenummer: 08700995.7
(22) Anmeldetag: 07.01.2008
(51) Int. Cl.: B62D 5/04, F16H 7/14

(54) **ELEKTRISCHE SERVOLENKUNG MIT RIEMENANTRIEB**
ELECTRIC POWER STEERING SYSTEM WITH BELT DRIVE
DIRECTION ASSISTEE ELECTRIQUE A ENTRAINEMENT PAR COURROIE

(30) Priorität: 24.01.2007 DE 102007004521
(43) Veröffentlichungstag der Anmeldung: 25.11.2009
(73) Patentinhaber: ThyssenKrupp Presta SteerTec GmbH, 40476 Düsseldorf (DE)
(72) Erfinder: SPENGLER, Matthias, 73666 Baltmannsweiler (DE); KEPPLER, Jens, 72805 Lichtenstein (DE); STOLZENBURG, Jens, 74360 Ilsfeld (DE)
(74) Vertreter: Lenzing Gerber Stute
(86) Internationale Anmeldenummer: PCT/EP2008/000050
(87) Internationale Veröffentlichungsnummer: WO 2008/089882

(56) Entgegenhaltungen:
- JP-A- 2005 349 862

## Beschreibung

Die vorliegende Erfindung betrifft eine elektrische Servolenkung mit den Merkmalen des Oberbegriffs des Anspruchs 1.

Eine solche Servolenkung ist aus der DE 10052275 A1 bekannt. Bei dieser Servolenkung wird eine Lenkunterstützungskraft von einem elektrischen Servomotor erbracht und über eine Riemenscheibe, einen Zahnriemen und ein Untersetzungsgetriebe auf die Zahnstange übertragen. Es ist dabei nicht zuletzt wegen der gewünschten Geräuscharmut erforderlich, das Spiel des Riemenantriebs so gering wie möglich zu machen und insbesondere eine konstante Riemenspannung in beiden Laufrichtungen des Antriebs zu gewährleisten.

Bei der bekannten Servolenkung wird die Vorspannung über eine an der Rückseite des Zahnriemens anliegende Spannrolle bewirkt, die fest eingestellt wird.

Eine weitere Möglichkeit, ein umlaufendes Antriebsmittel in beide Laufrichtungen des Antriebs zu spannen, ist aus der britischen Patentschrift GB 1,117,863 bekannt. Bei dieser Vorrichtung wird ein Kettenantrieb mit einer festen und einer verschieblich gelagerten Welle dadurch gespannt, dass der verschiebliche Lagerbock über einen federvorgespannten Keil von der fest gelagerten Welle weg gedrängt wird.

Schließlich sind bei anderen elektromechanischen Servolenkungen noch zwei andere Arten der Einstellung der Riemenspannung bekannt. Zum einen kann die Riemenspannung über eine Exzenterscheibe eingestellt werden, zum anderen werden Zugvorrichtungen eingesetzt, die das Motorgehäuse von dem Gehäuse des Lenkgetriebes wegziehen und so den Riemen spannen. Diese Lösungen sind aufwendig und dementsprechend teuer.

Weiterhin ist aus der JP 2005-349662 A eine elektrische Servolenkung für ein Kraftfahrzeug mit einer in einem Lenkungsgehäuse axial verschieblich gelagerten Zahnstange bekannt, die von einem in einem Motorgehäuse angeordneten elektrischen Servomotor über einen Riemen und ein Getriebe zur Lenkunterstützung antreibbar ist, wobei zwischen dem Motorgehäuse und dem Lenkungsgehäuse eine Einstelleinheit vorgesehen ist, die das Motorgehäuse von dem Lenkungsgehäuse zur Spannung des Riemens weg drängt.

Es ist deshalb Aufgabe der vorliegenden Erfindung, eine Servolenkung der anfangs genannten Art derart zu verbessern, dass eine feste Einstellung der Riemenspannung bei der Montage vorgenommen werden kann, ohne dass zusätzliche Bauelemente wie beispielsweise eine Spannrolle an dem Riemen anliegen, um so einen zusätzlichen Verschleiß des Riemens durch ein Spannelement auszuschließen. Dabei sollen auch zusätzliche aufwendige Einstellelemente vermieden werden, die den Einstellvorgang kompliziert gestalten.

Diese Aufgabe wird von einer Servolenkung mit der Merkmalen des Anspruchs 1 und von einem Verfahren mit den Merkmalen des Anspruchs 8 gelöst.

Weil bei einer elektrischen Servolenkung für ein Kraftfahrzeug mit einer in einem Lenkungsgehäuse axial verschieblich gelagerten Zahnstange, die von einem in einem Motorgehäuse angeordneten elektrischen Servomotor über einen Riemen und ein Getriebe zur Lenkunterstützung antreibbar ist, zwischen dem Motorgehäuse und dem Lenkungsgehäuse ein Einschubkeil vorgesehen ist, der das Motorgehäuse von dem Lenkungsgehäuse zur Spannung des Riemens weg drängt, kann die Spannung bereits bei der Montage einfach und zuverlässig eingestellt werden. Ein Nachlassen der Spannvorrichtung über die Betriebsdauer des Produkts ist nicht zu erwarten. Der Einschubkeil ist dabei ein sehr preiswertes Bauelement, wodurch sich auch ein wirtschaftlicher Vorteil ergibt.

Vorteilhaft ist insbesondere, wenn der Riemen ein Zahnriemen ist. Weiter kann das Getriebe ein Kugelgewindetrieb sein.

Das Motorgehäuse ist mit wenigstens zwei Befestigungsmitteln in Form von Schrauben oder Stehbolzen an dem Lenkungsgehäuse befestigt. Dabei sind die Durchgangsbohrungen des zu befestigenden Gehäuses als Langlöcher oder mit Übermaß ausgeführt, so dass das Motorgehäuse relativ zu dem Lenkungsgehäuse vor dem endgültigen Anziehen der Befestigungsmittel verschiebbar ist. Vorteilhaft ist eines der Befestigungsmittel als Schwenklager zur Riemenspannung durch Verschwenken des Motorgehäuses ausgebildet.

Ein versehentliches Lösen der Riemenspannung während des Befestigungsvorgangs wird zuverlässig verhindert, wenn der Einschubkeil auf wenigstens einer Keilfläche eine Verzahnung, insbesondere mit Sägezahnprofil aufweist.

Definierte Montagepositionen ergeben sich, wenn das Lenkungsgehäuse und/oder das Motorgehäuse Anlageflächen für den Einschubkeil aufweist. Dabei kann eine stufenweise rastende Einstellung erzielt werden, wenn wenigstens eine der Anlageflächen eine zu der Verzahnung des Einschubkeils komplementäre Verzahnung aufweist.

Als besonders vorteilhaft ist dabei die einteilige Lösung anzusehen, da das Bauteil in einfachster Weise, z.B. in einem Spritzgussverfahren hergestellt werden kann und eine einfache Montage am Lenkgehäuse durch das Aufstecken des Führungsschuhes möglich ist.

Durch die einstückige Verbindung des Führungsschuhes mit dem Keil über eine angegossene Schlaufe oder eine unverlierbar gestaltete zweiteilige Ausführungsform kann direkt nach der Montage der Getriebeeinheit die Zahnriemenspannung über den Keil eingestellt werden, indem der Keil, der sich am anderen Ende der Schlaufe befindet, in den Führungsschuh eingeführt wird.

Bei einem Verfahren zur Riemenspannung bei einer wie oben aufgebauten elektrischen Kraftfahrzeugservolenkung sind folgende Schritte vorgesehen:
- Vormontieren des Motorgehäuses mit dem Servoantrieb an dem bereits die Zahnstange und das Getriebe sowie den Riemen tragenden Lenkungsgehäuse mit Befestigungsmitteln derart, dass das Motorgehäuse um eines der Befestigungsmittel parallel zu einem Flansch schwenkbar ist;
- Einsetzen eines Einschubkeils zwischen das Lenkungsgehäuse und das Motorgehäuse zur Spannung des Riemens bis zu einem bestimmten Wert der Riemenspannung;
- Anziehen der Befestigungsmittel zur dauerhaften Fixierung des Motorgehäuses in der erreichten Position.

Wenn vor dem Anziehen der Befestigungsmittel der Servoantrieb über wenigstens eine Umdrehung gedreht wird, wobei die Riemenspannung ständig gemessen wird, und dass bei Unterschreiten eines Mindestwertes der Riemenspannung in einer Position der Einschubkeil weiter zwischen das Lenkungsgehäuse und das Motorgehäuse eingeschoben wird, ist sichergestellt, dass die minimal erforderliche Riemenspannung nicht unterschritten wird.

Nachfolgend wird ein Ausführungsbeispiel der vorliegenden Erfindung anhand der Zeichnung beschrieben. Es zeigen:
Fig. 1: eine elektrische Servolenkung mit einem achsparallel zur Zahnstange angeordneten Servomotor in einer perspektivischen Darstellung;
Fig. 2: den Servoantrieb der Lenkung aus Fig. 1 in einer Explosionsdarstellung;
Fig. 3: die Lenkung gem. Fig. 1 und Fig. 2 in einem Radialschnitt entlang der Linie III - III aus Fig. 1; sowie
Fig. 4: einen Einschubkeil 21 in einer vormontierten Ausführungsform.

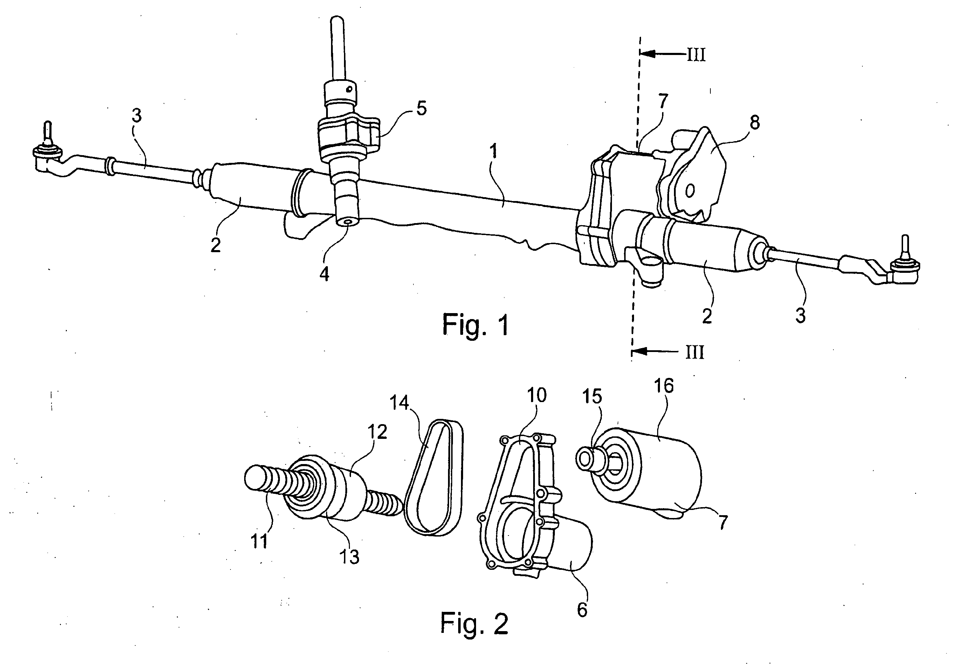

Die Fig. 1 zeigt eine elektrische Servolenkung mit einem Lenkungsgehäuse 1, das eine im Inneren verschieblich gelagerte Zahnstange umgibt. Die Zahnstange trägt endseitig jeweils ein Kugelgelenk, das von einem Faltenbalg 2 umgeben ist. Die Kugelgelenke wiederum tragen jeweils eine Spurstange 3. Ein Ritzelgehäuse 4 umgibt das Lenkritzel, welches mit der Zahnstange kämmt. Das Lenkritzel wiederum ist zur Verbindung mit einer Lenksäule und mit einem Lenkrad eingerichtet. Es trägt weiter einen Drehmomentsensor für die Steuerung der Lenkung, der in einem Sensorgehäuse 5 angeordnet ist.

An dem gegenüber liegenden Ende des Lenkungsgehäuses 1 ist in einem lösbaren Gehäuseteil 6 ein Reduziergetriebe zum Antrieb der Zahnstange angeordnet. Das Gehäuseteil 6 umfasst weiter ein Motorgehäuse 7, das in einem Abstand parallel zu dem Lenkungsgehäuse 1 angeordnet ist. Das Motorgehäuse 7 trägt wiederum eine Steuerelektronik 8 zur Ansteuerung des im Motorgehäuse 7 angeordneten Servomotors.

Die Baugruppe des Servoantriebs ist in der Fig. 2 näher dargestellt. Der Gehäuseteil 6 trägt an seiner sichtbaren Flachseite einen Flansch 10 zur Befestigung an dem nicht sichtbaren Lenkungsgehäuse 1. Eine Zahnstange 11 ragt in ihrer Längs- oder Axialrichtung durch den Gehäuseteil 6 hindurch. Die Zahnstange 11 trägt einen Kugelgewindetrieb 12, der mit seinen Kugeln spielfrei in ein entsprechendes Gewinde der Zahnstange 11 eingreift. Der Kugelgewindetrieb 12 ist im Inneren des Gehäuseteils 6 drehbar gelagert. Umfangsseitig weist der Kugelgewindetrieb 12 eine Verzahnung 13 für einen Zahnriemen 14 auf. Der Zahnriemen 14 wiederum läuft innerhalb des Gehäuseteils 6 von dem Kugelgewindetrieb 12 zu einem entsprechend ausgebildeten Ritzel 15 des Servomotors 16, der in dem Motorgehäuse 7 angeordnet ist.

Das weitere Zusammenwirken der insoweit beschriebenen Komponenten ist aus dem Stand der Technik bekannt und muss hier nicht näher beschrieben werden. Gleiches gilt für die Steuerung und den Betrieb der Servolenkung.

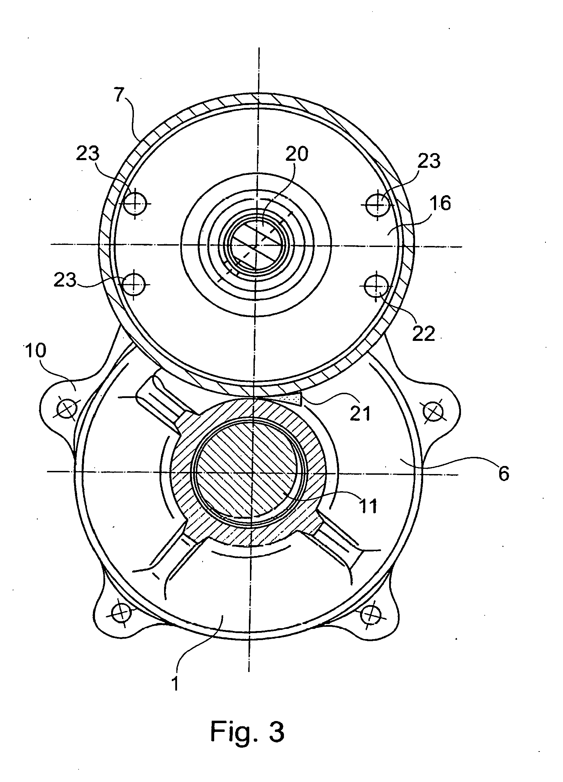

Bei der Montage der Baugruppe gem. Fig. 2 ist es jedoch erforderlich, den Zahnriemen 14 definiert vorzuspannen, um Antriebsspiel insbesondere bei einem Wechsel der Drehrichtung des Servomotors 16 möglichst weitgehend auszuschließen. Die Einrichtung und das Verfahren hierzu wird nachfolgend anhand der Fig. 3 näher beschrieben.

Die Fig. 3 zeigt einen Querschnitt durch die Servolenkung gem.
Fig. 1 etwa entlang der Linie III - III aus Fig. 1. Die in der Zeichnung dargestellte Ansicht stellt einen Querschnitt in Radialrichtung der Zahnstange 11 und einer Motorwelle 20 dar.

Die Zahnstange 11 ist in nicht dargestellten Gleitlagern in Axialrichtung verschieblich, aber in Radialrichtung spielfrei geführt. Ihre Position in Radialrichtung ist entsprechend genau fixiert. Ebenso ist die Motorwelle 20 in Lagern des Servomotors 16 präzise gelagert. Der Kugelgewindetrieb 12, der ebenso spielfrei auf der Zahnstange 11 angeordnet ist, nimmt eine genau definierte Position in dem Gehäuseteil 6 ein. Der Zahnriemen 14 liegt bei fertig montierter Lenkung einerseits auf dem Kugelgewindetrieb 12, dort auf der Verzahnung 13, und andererseits auf dem Ritzel 15 des Servomotors 16 auf. Eine Spannung des Zahnriemens 14 kann deshalb über die Einstellung des Abstandes der Motorwelle 20 von der Zahnstange 11 erfolgen. Dies wird im Stand der Technik, wie bereits oben erwähnt, über Spannrollen, Exzenterscheiben oder Zugvorrichtungen bewirkt. Die vorliegende Erfindung löst dieses Problem durch Verwendung eines Einschubkeils 21, der zwischen das Lenkungsgehäuse, genauer gesagt den Gehäuseteil 6 und das Motorgehäuse 7 eingeschoben wird. Der Einschubkeil 21 drängt das Motorgehäuse 7 weg von dem Gehäuseteil 6 und damit die Motorwelle 20 mit dem Ritzel 15 weg von dem Kugelgewindetrieb 12 mit der Verzahnung 13. Der Zahnriemen 14, der beide Baugruppen umspannt, wird dadurch gespannt.

Im Einzelnen wird dies dadurch bewirkt, dass eine Befestigungsschraube 22 als Schwenklager für das Motorgehäuse 7 gegenüber dem Gehäuseteil 6 ausgebildet ist, beispielsweise durch Einsetzen einer Hülse in eine in beiden Gehäuseteilen fluchtend angebrachte Bohrung. Die drei übrigen Befestigungsschrauben 23 sitzen einerseits in Gewindebohrungen, durchgreifen aber andererseits Gehäusebohrungen des dem Schraubenkopf zugewandten Gehäuseteils, die gegenüber dem Normmaß vergrößert sind. Die Gehäusebohrungen können auch als Langlöcher ausgeführt sein, um eine Verschwenkung des Motorgehäuses 7 gegenüber dem Gehäuseteil 6 zu ermöglichen. Auf diese Weise kann der Zahnriemen 14 gespannt werden. Je nach Einbaulage kann aber auch jede der Schrauben 23 das Schwenklager bilden.

In der Praxis wird der Vorgang des Riemenspannens so ausgeführt werden, dass die Montage zunächst mit einem lockeren Einsetzen der Befestigungsschrauben 22 und 23 erfolgt, beispielsweise mit einem ersten, geringen Drehmoment, welches eine Verschwenkung des Motorgehäuses 7 noch erlaubt. Der Einschubkeil 21 wird dann in die gezeichnete Position in Fig. 3 zwischen den Gehäuseteil 6 und das Motorgehäuse 7 eingesetzt. Dabei trägt der Einschubkeil 21 an seinen beiden Keilflächen Verzahnungen, die ein Herausrutschen des Einschubkeils 21 aus der erreichten Position verhindern. Der Einschubkeil 21 wird dann soweit zwischen die beiden Gehäuseteile gedrängt, bis die gewünschte Spannung des Zahnriemens 14 erreicht ist. Dabei wird das Motorgehäuse 7 um die Gewindeschraube 22 verschwenkt. Die Riemenspannung wird dabei über eine Kraft-Weg-Messeinrichtung kontrolliert. Nach Erreichen eines Vorgabewerts der Riemenspannung wird diese über eine gesamte Umdrehung der Vorrichtung kontrolliert. Sollte die minimale Riemenspannung an einer Stelle unterschritten werden, so kann der Einschubkeil 21 weiter in den Spalt zwischen den beiden Gehäuseteilen gedrückt werden. Sodann werden die Befestigungsschrauben 22 und 23 mit einem festgelegten Drehmoment angezogen. Der Einschubkeil 21 verbleibt in der erreichten Position, um über die gesamte Betriebsdauer der Lenkung das Absinken des Servomotors sicher zu verhindern.

Eine besonders präzise Einstellung wird ermöglicht, wenn sowohl der Einschubkeil 21 als auch die an den Gehäuseteilen ausgebildeten Laufflächen für den Einschubkeil 21 ein Sägezahnprofil aufweisen. Dann kann der Einschubkeil 21 nach Bedarf jeweils um einen Zahn weiter eingeschoben werden, wodurch eine schrittweise Erhöhung der Riemenspannung möglich wird.

Die Befestigungsvorrichtungen für das Motorgehäuse 7 können auch Stehbolzen sein, wobei dann bei 22 die Mantelfläche des Stehbolzens zusammen mit einer entsprechenden Bohrung in dem umgebenden Gehäuse das Schwenklager für das Motorgehäuse 7 bilden kann. Für eine besonders präzise Einstellung der Riemenspannung ist ein Voranzugsmoment für die Befestigungsschrauben 22 und 23 festzulegen, das vor der Positionierung des Einschubkeils 21 bereits ein Wackeln des Motorgehäuses 7 gegenüber dem Gehäuseteil 6 ausschließt.

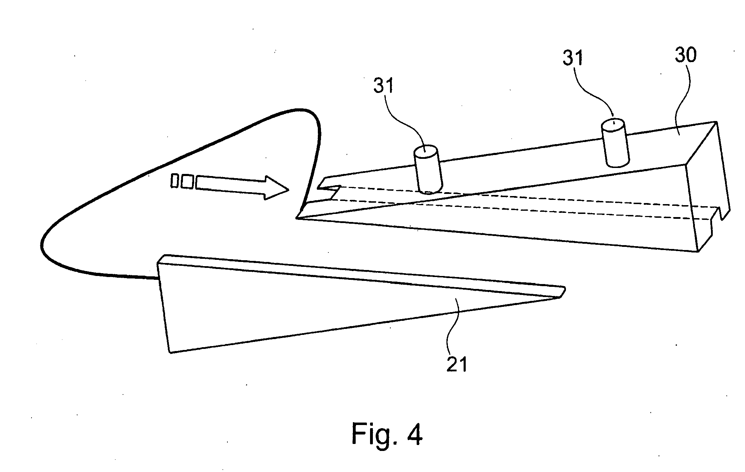

Die Figur 4 zeigt einen Einschubkeil 21 in einer vormontierten Ausführungsform. Der Einschubkeil 21 wird hier im Verbund mit einer Führung 30 hergestellt, so dass die Schnittstelle zwischen Führung 30 und Einschubkeil 21 die Verzahnung aufweist, welche die Rastfunktion der Spannvorrichtung sicherstellt.

Dieser Verbund ist auch in besonders einfacher Weise an dem Lenkgehäuse 1 zu befestigten. Der Keil-Führungs-Verbund kann wahlweise als einteilige- oder mehrteilige Lösung erfolgen. Die Verbindung ist der Gestalt, dass die Komponenten unverlierbar miteinander verbunden sind. Dies kann über eine Halteschlaufe (einteilig) als auch über Formschluss z.B. einer Führungsnut mit konischer Form oder mittels einer Schwalbenschwanzführung (zweiteilig) erfolgen.

Der Keil-Führungs-Verbund wird über die Führung mittels geeigneter Befestigungsmöglichkeiten (Clipslösung) am Lenkgehäuse angebracht. Hierzu sind an der Führung 30 bei diesem Ausführungsbeispiel zwei Zapfen 31 vorgesehen, die in entsprechende Bohrungen des Lenkungsgehäuses 1 oder des Motorgehäuses 7 einsetzbar sind.

### Bezugszeichenliste

1. Lenkungsgehäuse
2. Faltenbalg
3. Spurstange
4. Lenkritzelgehäuse
5. Sensorgehäuse
6. Gehäuseteil
7. Motorgehäuse
8. Steuerelektronik
10. Flansch
11. Zahnstange
12. Kugelgewindetrieb
13. Verzahnung
14. Zahnriemen
15. Ritzel
16. Servomotor
20. Motorwelle
21. Einschubkeil
22. Befestigungsschraube
23. Befestigungsschraube
30. Führung
31. Zapfen

## Patentansprüche

1. Elektrische Servolenkung für ein Kraftfahrzeug mit einer in einem Lenkungsgehäuse (1) axial verschieblich gelagerten Zahnstange (11), die von einem in einem Motorgehäuse (7) angeordneten elektrischen Servomotor (16) über einen Riemen (14) und ein Getriebe (12) zur Lenkunterstützung antreibbar ist, **dadurch gekennzeichnet, dass** zwischen dem Motorgehäuse (7) und dem Lenkungsgehäuse (1) ein Einschubkeil (21) vorgesehen ist, der das Motorgehäuse (7) von dem Lenkungsgehäuse (1) zur Spannung des Riemens (14) weg drängt.

2. Servolenkung nach Anspruch 1, **dadurch gekennzeichnet, dass** der Riemen (14) ein Zahnriemen ist.

3. Servolenkung nach einem der vorhergehenden Ansprüche, **dadurch gekennzeichnet, dass** das Motorgehäuse (7) mit wenigstens zwei Befestigungsmitteln (22, 23) an dem Lenkungsgehäuse (1) befestigt ist, wobei eines der Befestigungsmittel (22) als Schwenklager ausgebildet ist.

4. Servolenkung nach einem der vorhergehenden Ansprüche, **dadurch gekennzeichnet, dass** der Einschubkeil (21) auf wenigstens einer Keilfläche eine Verzahnung aufweist.

5. Servolenkung nach einem der vorhergehenden Ansprüche, **dadurch gekennzeichnet, dass** das Lenkungsgehäuse (1) und/oder das Motorgehäuse (7) Anlageflächen für den Einschubkeil (21) aufweist.

6. Servolenkung nach Anspruch 5, **dadurch gekennzeichnet, dass** wenigstens eine der Anlageflächen eine zu der Verzahnung des Einschubkeils (21) komplementäre Verzahnung aufweist.

7. Servolenkung nach einem der vorhergehenden Ansprüche, **dadurch gekennzeichnet, dass** der Einschubkeil (21) mit einer Führung (30) einstückig oder unverlierbar zweiteilig vorgefertigt ist.

8. Verfahren zur Riemenspannung bei einer elektrischen Kraftfahrzeugservolenkung nach einem der vorhergehenden Ansprüche mit folgenden Schritten:
- Vormontieren des den Servoantrieb (15, 16, 20) enthaltenden Motorgehäuses (7) an dem Lenkungsgehäuse (1), welches die Zahnstange (11) und das Getriebe (12) sowie den Riemen (14) trägt, mit Befestigungsmitteln (22, 23) derart, dass das Motorgehäuse (7) parallel zu einem Flansch (10) verschiebbar, insbesondere um eines der Befestigungsmittel (22) schwenkbar ist;
- Einsetzen eines Einschubkeils (21) zwischen das Lenkungsgehäuse (1) und das Motorgehäuse (7) zur Spannung des Riemens (14) bis zu einem bestimmten Wert der Riemenspannung;
- Anziehen der Befestigungsmittel (22, 23) zur dauerhaften Fixierung des Motorgehäuses (7) in der erreichten Position.

9. Verfahren nach Anspruch 8, **dadurch gekennzeichnet, dass** vor dem Anziehen der Befestigungsmittel der Servoantrieb über wenigstens eine Umdrehung gedreht wird, wobei die Riemenspannung ständig gemessen wird, und dass bei Unterschreiten eines Mindestwertes der Riemenspannung in einer Position der Einschubkeil (21) weiter zwischen das Lenkungsgehäuse (1) und das Motorgehäuse (7) eingeschoben wird.

## Claims

1. Electric power steering system for a motor vehicle with a toothed rod (11) mounted so as to be axially displaceable in a steering housing (1), which toothed rod (11) can be driven by an electric servomotor (16) arranged in a motor housing (7) by means of a belt (14) and a gear system (12) to support the steering, **characterised in that** a insertion wedge (21) is provided between the motor housing (7) and the steering housing (1), which forces the motor housing (7) away from the steering housing (1) in order to tension the belt (14).

2. Power steering system according to Claim 1, **characterised in that** the belt (14) is a toothed belt.

3. Power steering system according to any one of the preceding claims, **characterised in that** the motor housing (7) is secured by at least two securing means (22, 23) to the steering housing (1), wherein one of the securing means (22) is designed as a pivot bearing.

4. Power steering system according to any one of the preceding claims, **characterised in that** the insertion wedge (21) has a tooth arrangement on at least one wedge face.

5. Power steering system according to any one of the preceding claims, **characterised in that** the steering housing (1) and/or the motor housing (7) have contact surfaces for the insertion wedge (21).

6. Power steering system according to Claim 5, **characterised in that** at least one of the contact surfaces has a tooth arrangement which is complementary to the tooth arrangement of the insertion wedge (21).

7. Power steering system according to any one of the preceding claims, **characterised in that** the insertion wedge (21) is prefabricated with a guide element (30) as a single piece or as two undetachable pieces.

8. Method for belt tensioning with an electric motor vehicle power steering system according to any one of the preceding claims, with the following steps:
- pre-installation of the motor housing (7) containing the servo-drive (15, 16, 20) to the steering housing (1), which carries the toothed rod (11) and the gear system (12) as well as the belt (14), with securing means (22, 23), in such a way that the motor housing (7) can be displaced parallel to a flange (10), in particular can be pivoted about one of the securing means (22);
- insertion of an insertion wedge (21) between the steering housing (1) and the motor housing (7) for tensioning the belt (14) up to a specific belt tension value;
- tightening of the securing means (22, 23) for the lasting fixing of the motor housing (7) in the position reached.

9. Method according to Claim 8, **characterised in that**, before the tightening of the securing means, the servo-drive is rotated by at least one revolution, wherein the belt tension is constantly measured, and **in that**, if a minimum value of the belt tension is not achieved in a position, the insertion wedge (21) is pushed in further between the steering housing (1) and the motor housing (7).

## Revendications

1. Direction assistée électrique pour un véhicule automobile, comprenant une crémaillère (11) montée axialement coulissante dans un carter de direction (1) et pouvant être entraînée pour l'assistance de direction, par un servomoteur électrique (16) agencé dans un carter de moteur (7), l'entraînement s'effectuant par l'intermédiaire d'une courroie (14) et d'une transmission (12), **caractérisée en ce qu'**entre lé carter de moteur (7) et le carter de direction (1) est prévu un coin insérable (21) qui repousse le carter de moteur (7) en l'éloignant du carter de direction (1), pour assurer la tension de la courroie (14).

2. Direction assistée selon la revendication 1,
**caractérisée en ce que** la courroie (14) est une courroie crantée.

3. Direction assistée selon l'une des revendications précédentes, **caractérisée en ce que** le carter de moteur (7) est fixé au carter de direction (1) par au moins deux moyens de fixation (22, 23), l'un des moyens de fixation (22) étant réalisé en tant que palier de pivotement.

4. Direction assistée selon l'une des revendications précédentes, **caractérisée en ce que** le coin insérable (21) présente une denture sur au moins une surface de coin.

5. Direction assistée selon l'une des revendications précédentes, **caractérisée en ce que** le carter de direction (1) et/ou le carter de moteur (7) présente(nt) des surfaces d'appui pour le coin insérable (21).

6. Direction assistée selon la revendication 5, **caractérisée en ce que** l'une au moins des surfaces d'appui présente une denture complémentaire à la denture du coin insérable (21).

7. Direction assistée selon l'une des revendications précédentes, **caractérisée en ce que** le coin insérable (21) est préfabriqué avec un guidage (30), d'un seul tenant avec celui-ci ou en formant de manière imperdable deux parties avec celui-ci.

8. Procédé pour tendre la courroie dans une direction assistée électrique de véhicule automobile selon l'une des revendications précédentes, comprenant les étapes suivantes :
- pré-montage du carter de moteur (7) renfermant l'entraînement d'assistance (15, 16, 20), sur le carter de direction (1) qui porte la crémaillère (11) et la transmission (12) ainsi que la courroie (14), à l'aide de moyens de fixation (22, 23) de façon à ce que le carter de moteur (7) puisse coulisser parallèlement à un flasque (10), et notamment pivoter autour de l'un des moyens de fixation (22) ;
- mise en place d'un coin insérable (21) entre le carter de direction (1) et le carter de moteur (7) pour tendre la courroie (14) jusqu'à une valeur déterminée de la tension de courroie ;
- serrage des moyens de fixation (22, 23) pour la fixation permanente du carter de moteur (7) dans la position atteinte.

9. Procédé selon la revendication 8, **caractérisé en ce qu'**avant le serrage des moyens de fixation, on fait tourner l'entraînement d'assistance sur une plage d'au moins un tour de rotation en mesurant constamment la tension de courroie, et si, dans une position, la tension de courroie passe en-dessous d'une valeur minimale de tension de courroie, on introduit davantage le coin insérable (21) entre le carter de direction (1) et le carter de moteur (7).
